(19) Europäisches Patentamt

European Patent Office

Office européen des brevets

(11) Veröffentlichungsnummer : **0 029 186**
**B1**

(12) **EUROPÄISCHE PATENTSCHRIFT**

(45) Veröffentlichungstag der Patentschrift :
01.09.82

(21) Anmeldenummer : 80106858.6

(22) Anmeldetag : 07.11.80

(51) Int. Cl.³ : **G 01 F 11/28, A 61 J 3/02**

(54) **Vorrichtung und Verfahren zur Abfüllung kleinster Pulvermengen.**

(30) Priorität : **09.11.79 DE 2945212**

(43) Veröffentlichungstag der Anmeldung :
**27.05.81 (Patentblatt 81/21)**

(45) Bekanntmachung des Hinweises auf die Patenterteilung : **01.09.82 Patentblatt 82/35**

(84) Benannte Vertragsstaaten :
**AT BE CH DE FR GB IT LI LU NL SE**

(56) Entgegenhaltungen :
FR A 2 038 476
FR A 2 220 135
FR E 95 169

(73) Patentinhaber : **C.H. BOEHRINGER SOHN**
**Postfach 200**
**D-6507 Ingelheim am Rhein (DE)**

(72) Erfinder : **Gupte, Arun Rajaram, Dr.**
**Oestricher Strasse 17**
**D-6507 Ingelheim/Rhein (DE)**
Erfinder : **Kladders, Heinrich**
**Ulmenstrasse 3**
**D-6507 Ingelheim/Rhein (DE)**
Erfinder : **Struth, Helmut**
**Wilhelm-Leuschner-Strasse 15**
**D-6507 Ingelheim/Rhein (DE)**

Imprimerie Jouve, 18, rue St-Denis, 75001 Paris, France

# 0 029 186

## Vorrichtung und Verfahren zur Abfüllung kleinster Pulvermengen

Die Erfindung betrifft eine Vorrichtung und ein Verfahren zur Abfüllung kleinster Pulvermengen, d.h. von Mengen unterhalb von 10 mg.

Es sind Vorrichtungen bekannt geworden, mit denen sich Pulver bis hinab zu Mengen von 10 mg abfüllen lassen. Solche Vorrichtungen bestehen aus einem Röhrchen, das nahe dem einen Ende mit einem verschiebbar angeordneten Stück Filz verschlossen ist (Prospekt der Firma Perry Industries INC., Hicksville, New York). Wird das Röhrchen mit dem offenen Ende in ein Pulver getaucht und an das anderere Ende ein Unterdruck angelegt ($p_{abs.} = 800$-$900$ mbar), so wird das Pulver in das Röhrchen hineingesaugt und darin festgehalten. Man bringt dann die Öffnung des Röhrchens über den zu füllenden Behälter und entleert es mit Druckluft. Pulvermengen über ca. 20 mg können auf diese Weise mit einer Standardabweichung von etwa 2 % abgefüllt werden, sofern es sich nicht um mikronisierte Substanzen handelt. Bei solchen jedoch beträgt auch schon im Bereich um 20 mg die Standardabweichung etwa 8-10 %.

Es wurde nun eine Vorrichtung erfunden, mit der sich Pulver, auch mikronisierte Pulver, im Mengenbereich von unterhalb 10 mg bis 0,5 mg, vorzugsweise 9 bis 1 mg, noch mit guter Genauigkeit abfüllen lassen.

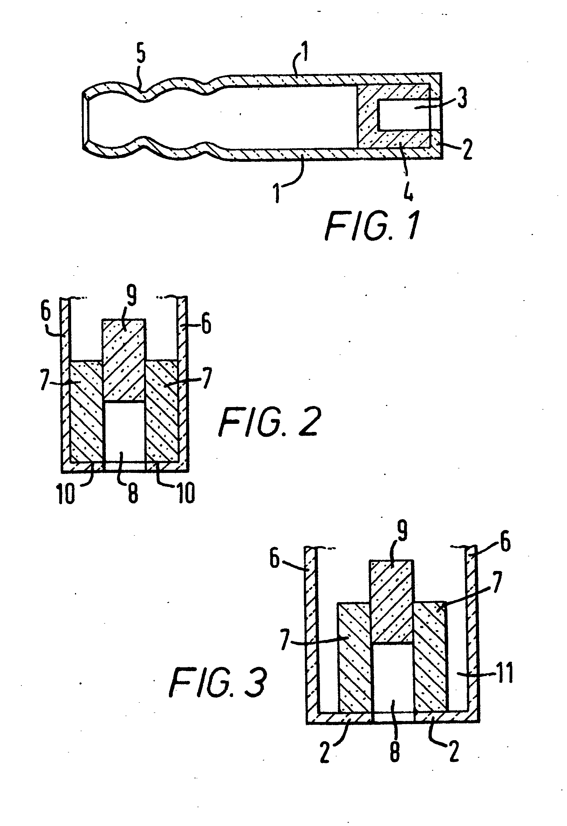

Eine Vorrichtung dieser Art ist in Fig. 1 dargestellt. Das Röhrchen (1) aus Metall, Glas oder Kunststoff ist mit einem Rand (2) versehen, der nur die Öffnung der Dosierkammer (3) frei läßt. Der Boden und die Seitenwände (4) der Dosierkammer (3) bestehen aus porösem Material, vorzugsweise Sintermetall, Keramik, gesintertem Glas (Fritten) geeigneter Porenweite. An dem der Dosierkammer gegenüberliegenden Ende der Vorrichtung ist ein Anschlußteil (5) vorgesehen, an dem die Vorrichtung mit einem Schlauch verbunden werden kann. Über diesen Schlauch kann der gewünschte Druck in der Dosierkammer (Unterdruck zum Füllen bzw. Überdruck zum Entleeren) eingestellt werden. Das Anschlußteil kann auch mit einem Dreiwegehahn ausgestattet werden, der die Verbindung mit einer Saug- und einer Druckleitung ermöglicht.

Figur 2 zeigt eine Ausführungsform der Dosierkammer, bei der das Volumen variabel ist. In den unteren Teil des Röhrchens (6) ist die poröse Wandung (7) der Dosierkammer fest eingebaut. Die Aussparung der Dosierkammer (8) vorzugsweise zylindrische Form. In diese Aussparung ist das Bodenstück (9) aus porösem Material dicht eingepaßt ; es kann axial verschoben werden und erlaubt dadurch, das Fassungsvermögen der Dosierkammer innerhalb gewisser Grenzen zu verändern. Die Stirnseite (10) der Dosierkammer seitenwand (7) ist luftundurchlässig ausgebildet, damit sich dort kein Pulver ansetzt.

In Figur 3 ist eine weitere Ausführungsform der Dosierkammer dargestellt, bei der zwischen der luftundurchlässigen Innenwand des Röhrchens (6) und der luftdurchlässigen Außenwand der Dosierkammer ein ringförmiger Spalt (11) vorgesehen ist.

Bei dem erfindungsgemäßen Verfahren wird in der Vorrichtung ein Unterdruck eingestellt (der Absolutdruck $p_{abs}$ beträgt dort 10-150, vorzugsweise 20-100 mbar) und dann die Vorrichtung einige Millimeter in das abzufüllende Pulver eingetaucht. Das Fassungsvermögen der Dosierkammer wird entsprechend der abzufüllenden Dosis gewählt bzw. eingestellt. Nach dem Füllen wird überschüssiges Pulver abgestreift und die Öffnung der Dosierkammer über den Behälter geführt, der gefüllt werden soll.

Durch einen Druckluftstoß wird das Pulver ausgeblasen. Die Größe des Überdrucks ist nicht kritisch, jedoch ist ein zu starker Luftstoß ungünstig.

Es hat sich als besonders vorteilhaft erwiesen, wenn die Tiefe der Dosierkammer nicht wesentlich größer oder kleiner ist als der Druchmesser.

Gegenüber der bekannten Vorrichtung, die bei der Füllung mit relativ geringem Unterdruck arbeitet ($p_{abs.} = 800$-$900$ mbar), wird erfindungsgemäß nicht nur eine weitaus geringere Standardabweichung erreicht, sondern auch Verstopfung vermieden.

Das erfindungsgemäße Verfahren bietet damit die Möglichkeit, z.B. mikronisierte Arzneimittel in Mengen von wenigen Milligramm mit ausreichender Genauigkeit und Sicherheit gegen Störungen in Kapseln oder sonstige Behälter für Einzeldosen abzufüllen. Auf diese Weise gefüllte Hartgelatinekapseln für die Inhalationstherapie können beispielsweise in Inhalationsgeräten eingesetzt werden, wie sie in der DE-A-23 46 914 beschrieben sind.

Die überlegenen Eigenschaften der Vorrichtung gemäß der Erfindung (A) ergeben sich aus dem Vergleich mit einer entsprechenden handelsüblichen Vorrichtung (B).

| Abgefüllte Menge/Substanz | Standardabweichung | |
|---|---|---|
| | Vorrichtung A | Vorrichtung B |
| 5,6 mg/Maisstärke | — | 9,7 % |
| 5,7 mg/mikronisierter Traubenzucker | — | 17,6 % |
| 5,6 mg/mikronisierter Traubenzucker | 3,0 % | — |
| 2,1 mg/mikronisierter Traubenzucker | 4,7 % | — |

2

Die Dosierkammern gemäß der Erfindung können nicht nur, wie in Figur 1-3 dargestellt, zylindrische Form haben, sondern zum Beispiel auch konische oder kugelförmige.

**Ansprüche**

1. Röhrchenförmige Vorrichtung zur Abfüllung von Pulvermengen im Bereich von unterhalb 10 bis 0,5 mg, vorzugsweise zwischen 9 und 1 mg, mit einem Anschlußteil (5) für Unterdruck und Druckluft und einer Dosierkammer (3, 8) am Ende des Röhrchens (1, 6), wobei der Boden der Dosierkammer (3, 8) aus porösem Material besteht, dadurch gekennzeichnet, daß auch die Seitenwände (4, 7) der Dosierkammer (3, 8) aus porösem Material bestehen und die an der Öffnung der Dosierkammer (3, 8) gelegenen Stirnseiten (10) der Dosierkammerseitenwände (4,7) luftundurchlässig ausgebildet sind.

2. Vorrichtung nach Anspruch 1, dadurch gekennzeichnet, daß das Ende des Röhrchens (1, 6) an der Dosierkammer (3, 8) einen Rand (2) aufweist, der nur die Öffnung der Dosierkammer (3, 8) frei läßt.

3. Vorrichtung nach Anspruch 1 oder 2, dadurch gekennzeichnet, daß der Boden (9) der Dosierkammer (8) axial verschiebbar ist.

4. Verfahren zur Abfüllung von Pulvermengen im Bereich von unterhalb 10 bis 0,5 mg, vorzugsweise zwischen 9 und 1 mg, mit Hilfe einer Vorrichtung nach einem der vorhergehenden Ansprüche, dadurch gekennzeichnet, daß das Pulver mit einem Unterdruck von $p_{abs.}$ gleich 10 bis 150 mbar, vorzugsweise 20 bis 100 mbar, in die Dosierkammer (3, 8) gesaugt und durch Anwendung von Druckluft in den zu füllenden Behälter entleert wird.

**Claims**

1. Tubular apparatus for transferring quantities of powder in the range of from less than 10 to 0.5 mg, preferably from 9 to 1 mg, having a connecting member (5) for applying suction and compressed air and a metering chamber (3, 8) at the end of the capillary tube (1, 6), the base of the metering chamber (3, 8) being of porous material, characterised in that the side walls (4, 7) of the metering chamber (3, 8) are also of porous material and the end faces (10) of the side walls (4, 7) of the metering chamber (3, 8) which are located at the opening of said metering chamber (3, 8) are impermeable to air.

2. Apparatus as claimed in claim 1 characterised in that the end of the capillary tube (1, 6) located at the metering chamber (3, 8) has a flange (2) which leaves only the opening of the metering chamber (3, 8) exposed.

3. Apparatus as claimed in claim 1 or 2, characterised in that the base (9) of the metering chamber (8) is axially displaceable.

4. Process for transferring quantities of powder in the range of from less than 10 to 0.5 mg, preferably from 9 to 1 mg, using an apparatus as claimed in one of the preceding claims, characterised in that the powder is aspirated into the metering chamber (3, 8) with a suction of $p_{abs.} = 10$ to 150 mbar, preferably 20 to 100 mbar, and is emptied into the container which is to be filled by the application of compressed air.

**Revendications**

1. Dispositif en forme de petit tube pour le transfert de quantités de poudre dans le domaine allant d'au-dessous de 10 à 0,5 mg, de préférence entre 9 et 1 mg, avec un organe de jonction (5) pour dépression et air comprimé et une chambre de dosage (3, 8) à l'extrémité du petit tube (1, 6), le fond de la chambre de dosage (3, 8) étant constitué de matière poreuse, caractérisé en ce que les parois latérales (4, 7) de la chambre de dosage (3, 8) sont également constituées de matière poreuse et en ce que les parties frontales (10) des parois latérales de la chambre de dosage (4, 7) situées à l'ouverture de la chambre de dosage (3, 8) sont constituées de façon imperméable à l'air.

2. Dispositif selon la revendication 1, caractérisé en ce que l'extrémité du petit tube (1, 6) présente, au niveau de la chambre de dosage (3, 8), un rebord (2) qui ne laisse libre que l'ouverture de la chambre de dosage (3, 8).

3. Dispositif selon les revendications 1 et 2, caractérisé en ce que le fond (9) de la chambre de dosage (8) est mobile en direction axiale.

4. Procédé pour le transfert de quantités de poudre dans le domaine d'au-dessous de 10 à 0,5 mg, de préférence entre 9 et 1 mg, à l'aide d'un dispositif selon l'une des revendications précédentes, caractérisé en ce que la poudre est aspirée dans la chambre de dosage (3, 8) avec une dépression de $p_{abs.}$ 10 à 150 mbar, de préférence 20 à 100 mbar et déchargée dans le récipient à remplir en utilisant de l'air comprimé.

FIG. 1

FIG. 2

FIG. 3